# EUROPEAN PATENT APPLICATION

(11) **EP 4 737 275 A1**
(43) Date of publication of application: **06.05.2026**
(21) Application number: 24851074.5
(22) Date of filing: 08.08.2024
(51) Int. Cl.: B62D 25/04, H01Q 1/32

(54) **VEHICLE PILLAR ASSEMBLY AND VEHICLE**

(30) Priority: 08.08.2023 CN 202310993088
(71) Applicant: Fuyao Glass Industry Group Co., Ltd., Fuqing, Fujian 350300 (CN)
(72) Inventor: CHEN, Xiaonan, Fuzhou, Fujian 350300 (CN); LIN, Yucai, Fuzhou, Fujian 350300 (CN); WANG, Li, Fuzhou, Fujian 350300 (CN); LIN, Chunshan, Fuzhou, Fujian 350300 (CN)
(74) Representative: Mewburn Ellis LLP
(86) International application number: PCT/CN2024/110538
(87) International publication number: WO 2025/031429

(57) **Abstract**

A vehicle pillar assembly (100) is provided, including an exterior trim panel (10), a near field communication (NFC) antenna module (20), and an NFC circuit board (30). The exterior trim panel (10) has an inner surface (12) facing an interior of a vehicle (1000). The NFC antenna module (20) is connected to the inner surface (12). The NFC circuit board (30) is located on a side of the exterior trim panel (10) facing the interior of the vehicle (1000). The NFC antenna module (20) and the NFC circuit board (30) are structurally separated from each other, and the NFC antenna module (20) is electrically connected to the NFC circuit board (30) via an electrical connection member. The NFC circuit board and the NFC antenna module are designed to be separate from each other, which avoids disadvantages of integrated NFC modules, such as occupying excessive mounting space and weakening the strength of a side enclosing sheet metal of the pillar assembly. A vehicle is further provided.

## Description

This application claims priority to Chinese Patent Application No. 2023109930880, filed August 8, 2023, and entitled "VEHICLE PILLAR ASSEMBLY AND VEHICLE", the entire disclosure of which is incorporated herein by reference.

### TECHNICAL FIELD

The present disclosure relates to the field of vehicle technology, and in particular, to a vehicle pillar assembly and a vehicle.

### BACKGROUND

An increasing number of vehicle-door unlocking modules on the market are beginning to adopt near field communication (NFC) technology to achieve functions such as keyless card-tapping unlocking, virtual card unlocking, or identity authentication unlocking. The existing NFC module is typically mounted in a vehicle pillar assembly. However, the existing NFC module occupies excessive mounting space in the vehicle pillar assembly, hindering the mounting of other intelligent devices therein.

### SUMMARY

The disclosure provides a vehicle pillar assembly and a vehicle, aiming to solve the problem of existing NFC modules occupying excessive space.

In an aspect, the disclosure provides a vehicle pillar assembly for a vehicle. The vehicle pillar assembly includes an exterior trim panel, a near field communication (NFC) antenna module, and an NFC circuit board. The exterior trim panel has an inner surface facing an interior of the vehicle. The NFC antenna module is connected to the inner surface. The NFC circuit board is located on a side of the exterior trim panel facing the interior of the vehicle. The NFC antenna module and the NFC circuit board are structurally separated from each other, and the NFC antenna module is electrically connected to the NFC circuit board via an electrical connection member.

In an embodiment, the NFC antenna module includes a protective member and an NFC antenna coil. The NFC antenna coil is mounted and fixed to the protective member, and the protective member is connected to the inner surface.

In an embodiment, the vehicle pillar assembly includes a protective shell. The protective shell covers the NFC antenna module and the NFC circuit board and is fixedly connected to the inner surface. The protective shell and the exterior trim panel encapsulate the NFC antenna module and the NFC circuit board.

In an embodiment, the NFC circuit board is fixedly connected to a surface of the protective member away from the exterior trim panel, and the NFC circuit board is electrically connected to the NFC antenna coil.

In an embodiment, the protective shell has a bottom wall and a side wall. The side wall surrounds a periphery of a side of the bottom wall, the bottom wall is opposite to and spaced apart from the exterior trim panel, and a surface of the side wall away from the bottom wall is fixedly connected to the inner surface. The NFC circuit board is fixedly connected to a surface of the bottom wall facing the exterior trim panel and is spaced apart from the NFC antenna module, and the NFC circuit board is electrically connected to the NFC antenna coil.

In an embodiment, the NFC circuit board is fixedly connected to the inner surface and is disposed parallel to and spaced apart from the NFC antenna module, and the NFC circuit board is electrically connected to the NFC antenna coil.

In an embodiment, the protective member includes a first protective layer and a second protective layer. In a thickness direction of the vehicle pillar assembly, the first protective layer is stacked on and fixed to the second protective layer. The first protective layer is connected to the inner surface. The second protective layer is disposed on a side of the first protective layer away from the exterior trim panel. The NFC antenna coil is connected between the first protective layer and the second protective layer.

In an embodiment, the first protective layer and the second protective layer are both ink coatings. The first protective layer is coated on the inner surface. The NFC antenna coil is coated on a surface of the first protective layer facing away from the exterior trim panel. The second protective layer is coated on the surface of the first protective layer facing away from the exterior trim panel and covers the antenna coil.

In an embodiment, the first protective layer and the second protective layer are both flexible printed circuits (FPCs) or insulating films, and the NFC antenna coil is clamped or coated between the first protective layer and the second protective layer.

In an embodiment, the exterior trim panel is made of plastic, or the exterior trim panel is made of glass, or the exterior trim panel is made of glass ceramic.

In an embodiment, the NFC antenna coil includes a body, and the body is formed by printing with conductive silver paste, or formed by wrapping a copper wire.

In an embodiment, the first protective layer and the second protective layer are both insulating films. The exterior trim panel is made of plastic. The first protective layer, the second protective layer, and the exterior trim panel are integrally formed through injection molding.

In another aspect, the disclosure further provides a vehicle. The vehicle includes the vehicle pillar assembly. The pillar assembly is connected between an upper beam and a lower beam of the vehicle.

In the disclosure, the NFC circuit board 30 and the NFC antenna module 20 are designed to be separate from each other, which avoids disadvantages of integrated NFC modules, such as occupying excessive mounting space, encroaching on the mounting space for other components, and weakening the strength of a side enclosing sheet metal of the pillar assembly 100. Furthermore, it addresses the challenge that integrated NFC modules are difficult to universally adapt to pillar assemblies 100 with varying spatial configurations due to the fixed form of the integrated NFC modules.

### BRIEF DESCRIPTION OF THE DRAWINGS

To illustrate the technical solutions of the disclosure more clearly, the following briefly introduces the accompanying drawings required for describing the embodiments. Obviously, the accompanying drawings in the following description show merely some embodiments of the disclosure. For a person of ordinary skill in the art, other drawings may be derived from these accompanying drawings without creative efforts.
FIG. 1 is a schematic structural view of a vehicle provided in the disclosure.
FIG. 2 is a schematic structural view of a pillar assembly provided in a first embodiment of the disclosure.
FIG. 3 is a cross-sectional schematic view of the pillar assembly illustrated in FIG. 2, taken along line A-A.
FIG. 4 is a schematic structural view illustrating that a near field communication (NFC) antenna module illustrated in FIG. 2 is mounted to an exterior trim panel.
FIG. 5 is a schematic view of a layer structure of the pillar assembly illustrated in FIG. 2.
FIG. 6 is a schematic structural view of a pillar assembly provided in another embodiment, illustrating that a protective member is a flexible printed circuit (FPC) board.
FIG. 7 is a schematic structural view of a pillar assembly provided in a second embodiment of the disclosure.
FIG. 8 is a cross-sectional schematic view of the pillar assembly illustrated in FIG. 7, taken along line B-B.
FIG. 9 is a schematic view of a layer structure of the pillar assembly illustrated in FIG. 7.
FIG. 10 is a schematic view of a layer structure of a pillar assembly provided in a third embodiment of the disclosure.

### DETAILED DESCRIPTION

The following will clearly and comprehensively illustrate technical solutions of embodiments of the disclosure with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

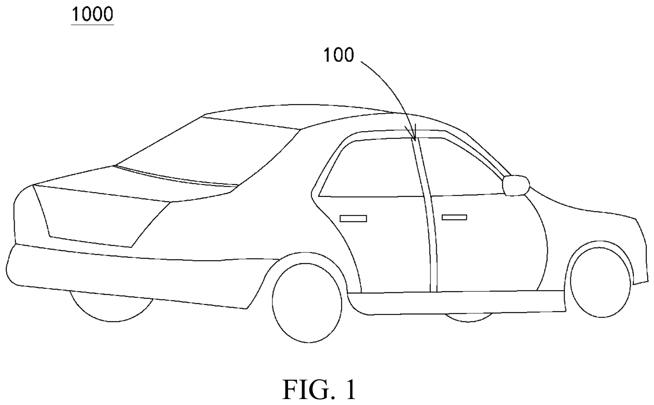

Reference is made to FIG. 1, which is a schematic structural view of a vehicle 1000 provided in the disclosure.

The vehicle 1000 includes a pillar assembly 100. The pillar assembly 100 is connected between an upper beam and a lower beam of the vehicle 1000. Moreover, a side of the pillar assembly 100 facing the exterior of the vehicle 1000 is typically provided with a decorative exterior trim member(s) or an intelligent component(s) with practical functions. The pillar assembly 100 may be a vehicle body A-pillar, B-pillar, or C-pillar. In embodiments of the disclosure, the pillar assembly 100 being a vehicle body B-pillar is taken as an example for subsequent illustration. Furthermore, an intelligent component having near field communication (NFC) sensing functionality is disposed in the pillar assembly 100 of the embodiments of the disclosure, enabling functions such as keyless card-tapping unlocking, virtual card unlocking, or identity authentication unlocking for vehicle doors.

Directional terms such as "inner" and "outer" mentioned in the embodiments of the disclosure are described based on the orientation illustrated in FIG. 1 of the accompanying drawings. "Inner" refers to a direction facing the interior of the vehicle 1000, and "outer" refers to a direction facing the exterior of the vehicle 1000. These terms do not limit the actual application scenarios of the vehicle 1000.

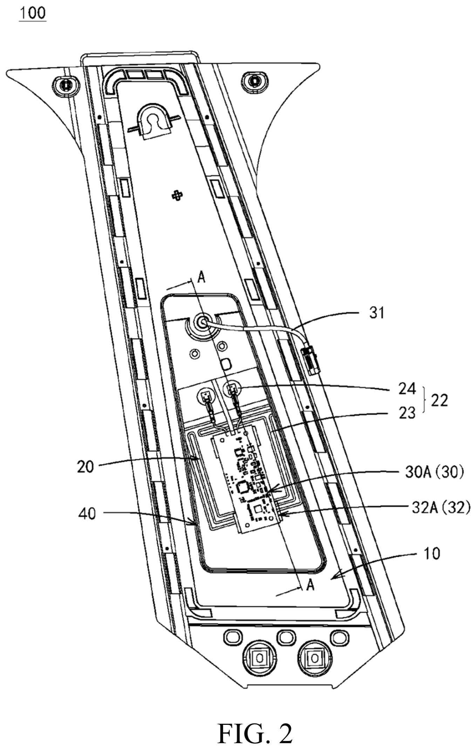

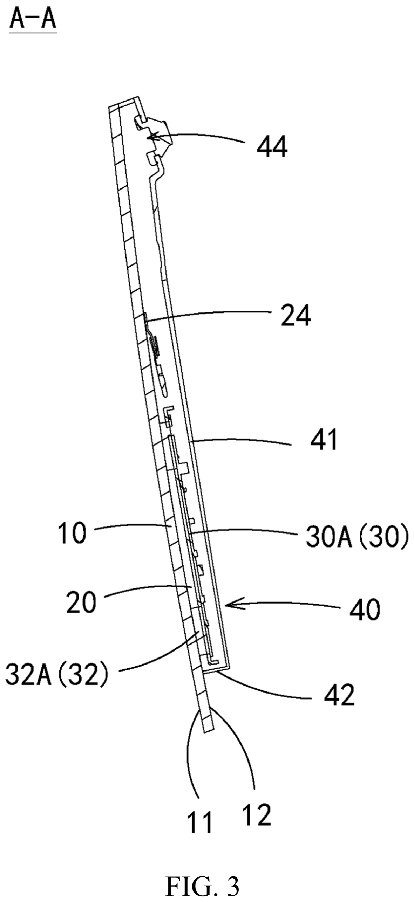

Reference is made to FIG. 2 and FIG. 3. FIG. 2 is a schematic structural view of the pillar assembly 100 provided in a first embodiment of the disclosure. FIG. 3 is a cross-sectional schematic view of the pillar assembly 100 illustrated in FIG. 2, taken along line A-A.

The pillar assembly 100 includes an exterior trim panel 10, an NFC antenna module 20, an NFC circuit board 30, and a protective shell 40. The NFC antenna module 20 is mounted and fixed to a side of the exterior trim panel 10 facing the interior of the vehicle 1000. The NFC circuit board 30 is located on the side of the exterior trim panel 10 facing the interior of the vehicle 1000. The protective shell 40 covers the NFC antenna module 20 and the NFC circuit board 30 and is fixedly connected to the exterior trim panel 10.

As illustrated in FIG. 3, the exterior trim panel 10 has an outer surface 11 and an inner surface 12. The outer surface 11 and the inner surface 12 are disposed opposite to each other in a thickness direction of the exterior trim panel 10. The outer surface 11 faces the exterior of the vehicle 1000, and the inner surface 12 faces the interior of the vehicle 1000. In some embodiments, the exterior trim panel 10 may be a glass exterior trim panel. The material for preparing the exterior trim panel 10 may be glass, such as soda-lime glass, alkaline aluminosilicate glass, alkaline borosilicate glass, and/or alkaline aluminoborosilicate glass. The material for preparing the exterior trim panel 10 may be glass-ceramic, such as Li₂O-Al₂O₃-SiO₂ system (i.e., LAS system) glass-ceramic, MgO-l₂O₃-SiO₂ system (i.e., MAS system) glass-ceramic, or glass-ceramic containing crystal phases. The crystal phases are crystal phases of any one or more of the following substances: mullite, spinel, α-quartz, β-quartz solid solution, petalite, lithium disilicate, β-spodumene, nepheline, and alumina. Furthermore, a glass exterior trim panel may be chemically strengthened, thermally strengthened, mechanically strengthened, or a combination thereof. In other embodiments, the exterior trim panel 10 may be a plastic exterior trim panel.

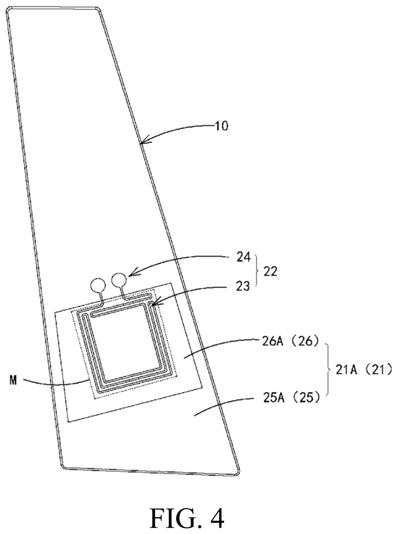

Reference is made to FIG. 4, which is a schematic structural view illustrating that the NFC antenna module 20 illustrated in FIG. 2 is mounted to the exterior trim panel 10.

The NFC antenna module 20 is mounted and fixed to the inner surface 12 of the exterior trim panel 10. The NFC antenna module 20 includes a protective member 21 and an NFC antenna coil 22. The NFC antenna coil 22 is mounted and fixed to the protective member 21, and the protective member 21 is mounted and fixed to the inner surface 12 of the exterior trim panel 10.

The NFC antenna coil 22 includes a body 23 and two conductive terminals 24. The body 23 is arranged circumferentially around the thickness direction of the pillar assembly 100 as an axis. A plane in which the body 23 lies is substantially parallel to the inner surface 12 of the exterior trim panel 10. The two conductive terminals 24 are respectively connected to opposite ends of the body 23 and protrude from the body 23. The two conductive terminals 24 are used for electrical connection with the NFC circuit board 30. The body 23 is of a racetrack-shaped structure formed by several metal wires. The body 23 may be formed by wires made of conductive silver paste, or the body 23 may be prepared by copper wires. In this embodiment, the body 23 of the NFC antenna coil 22 is in a shape of a character " 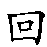 ", which is similar to the shape of an antenna coil on a smart card, and thus can produce good coupling effects. In other embodiments, the body 23 of the NFC antenna coil 22 may be of a circular shape, an elliptical shape, etc., which is not specifically limited.

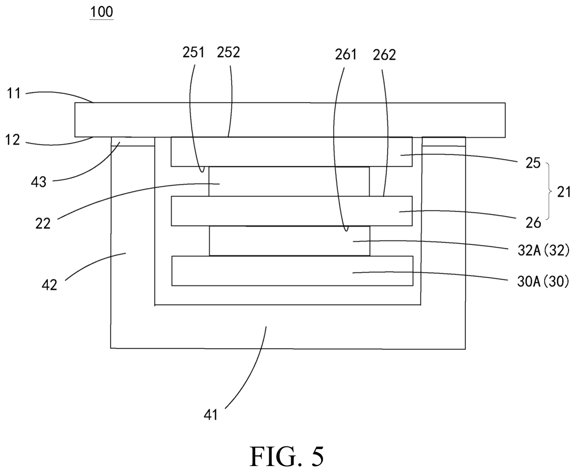

Reference is made to FIG. 4 and FIG. 5. FIG. 5 is a schematic view of a layer structure of the pillar assembly 100 illustrated in FIG. 2.

The protective member 21 is used to protect the body 23 from dust, moisture, and static electricity. In this embodiment, the protective member 21 has a layered structure and includes a first protective layer 25 and a second protective layer 26. In the thickness direction of the pillar assembly 100, the second protective layer 26 is stacked on and fixed to the first protective layer 25. The first protective layer 25 is connected to the inner surface 12 of the exterior trim panel 10. The second protective layer 26 is disposed on a side of the first protective layer 25 away from the exterior trim panel 10. The body 23 is disposed and fixed between the first protective layer 25 and the second protective layer 26. The two conductive terminals 24 protrude from the protective member 21.

The first protective layer 25 has a first surface 251 and a second surface 252. The first surface 251 and the second surface 252 are disposed opposite to each other in a thickness direction of the first protective layer 25. The first surface 251 faces the inner surface 12, and the second surface 252 faces away from the inner surface 12. The second protective layer 26 has a third surface 261 and a fourth surface 262. The third surface 261 and the fourth surface 262 are disposed opposite to each other in a thickness direction of the second protective layer 26. The third surface 261 faces the second surface 252, and the fourth surface 262 faces away from the second surface 252. The body 23 is disposed and fixed between the second surface 252 and the third surface 261. The first protective layer 25 and the second protective layer 26 are used to protect the body 23 from dust or oxidation, thereby preventing signal attenuation in the body 23 which makes it difficult to respond to smart cards.

As illustrated in FIG. 4, in this embodiment, the protective member 21A is an ink layer. That is, both the first protective layer 25A and the second protective layer 26A are ink coatings. Preferably, the color of the ink is black. The black ink layer can conceal the structures and devices located on the inner side of the exterior trim panel 10, enhancing the appearance of the vehicle pillar assembly 100. The first protective layer 25A is connected to the inner surface 12 of the exterior trim panel 10 and covers the inner surface 12 to conceal structures and devices on the inner side of the exterior trim panel 10. The body 23 is connected to the second surface 252 of the first protective layer 25A. The second protective layer 26A is disposed on a side of the first protective layer 25A facing away from the exterior trim panel 10 and completely covers the body 23. It may be understood that, the body 23 is disposed and fixed between the second surface 252 of the first protective layer 25A and the third surface 261 of the second protective layer 26A. The two conductive terminals 24 are fixedly connected to the second surface 252 of the first protective layer 25A, and the conductive terminals 24 protrude from the second protective layer 26A for electrical connection with the NFC circuit board 30. It may be understood that, the first protective layer 25 and the second protective layer 26 can protect the body 23 from dust, moisture, and static electricity.

Exemplarily, in the case where the exterior trim panel 10 is a glass exterior trim panel, the manufacturing process for the NFC antenna module 20 may be as follows. First, the first protective layer 25A is formed on the inner surface 12 of the exterior trim panel 10 by a first printing process (printing ink). Then, the NFC antenna coil 22 is formed on the second surface 252 of the first protective layer 25 by a second printing process (printing conductive silver paste). Finally, the second protective layer 26A is formed on the second surface 252 of the first protective layer 25 by a third printing process (printing ink) and covers the body 23. Since the ink layer can undergo high-temperature sintering after printing, the sintered ink can form a strong connection with the glass exterior trim panel, thereby fixing the NFC antenna module 20 to the inner surface 12 of the exterior trim panel 10.

A card-tapping area M of the vehicle 1000 covers a projection of the body 23 in the thickness direction of the pillar assembly 100. It may be understood that, when a user uses a card equipped with a coil, the card can induce and transmit signal with the body 23 of the NFC antenna coil 22 in the card-tapping area M. A larger area of the body 23 corresponds to a larger card-tapping area M and a greater interaction range with user cards, and thus a stronger signal strength.

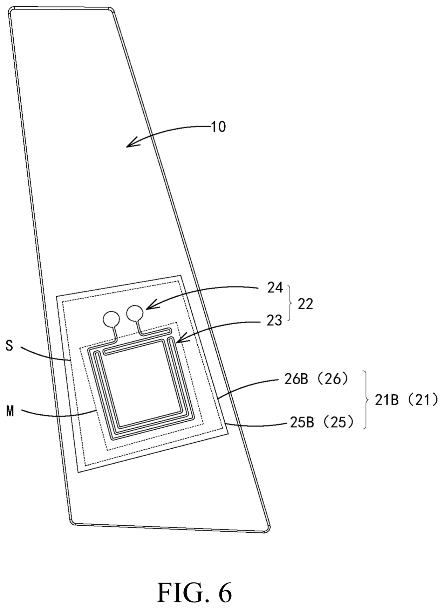

Reference is made to FIG. 6, which is a schematic structural view of the pillar assembly 100 according to another embodiment, illustrating that a protective member 21B is a flexible printed circuit (FPC) board.

In an embodiment, the protective member 21B is an FPC board. That is, both the first protective layer 25B and the second protective layer 26B are FPC boards. In this embodiment, the first protective layer 25B is connected to the inner surface 12 of the exterior trim panel 10. The body 23 is printed on the second surface 252 of the first protective layer 25B. The second protective layer 26B covers the first protective layer 25B from a side of the first protective layer 25B facing away from the exterior trim panel 10 and completely covers the body 23. In other embodiments, the body 23 may be printed on the third surface 261 of the second protective layer 26B. When the second protective layer 26B covers the first protective layer 25B from a side of the first protective layer 25B facing away from the exterior trim panel 10, the first protective layer 25B completely covers the body 23. When the second protective layer 26B is mounted and fixed to the first protective layer 25B, the third surface 261 of the second protective layer 26B is connected to the second surface 252 of the first protective layer 25B, and the body 23 is fixed between the second surface 252 of the first protective layer 25B and the third surface 261 of the second protective layer 26B. In this embodiment, in the thickness direction of the pillar assembly 100, the projection of the first protective layer 25B and the projection of the second protective layer 26B completely overlap and completely cover the projection of the body 23. The two conductive terminals 24 protrude from the first protective layer 25B and the second protective layer 26B, and are fixedly connected to the inner surface 12 of the exterior trim panel 10. Exemplarily, the first protective layer 25B may be adhered to the inner surface 12 of the exterior trim panel 10 via a gluing layer *S*. The card-tapping area *M* of the vehicle 1000 covers the projection of the body 23 in the thickness direction of the pillar assembly 100.

In an embodiment, the protective member 21 is an insulating film. That is, both the first protective layer 25 and the second protective layer 26 are insulating films. In this embodiment, the first protective layer 25 is connected to the inner surface 12 of the exterior trim panel 10. The second protective layer 26 covers the first protective layer 25 from a side of the first protective layer 25 facing away from the exterior trim panel 10. The body 23 is clamped between the first protective layer 25 and the second protective layer 26. Specifically, the third surface 261 of the second protective layer 26 is connected to the second surface 252 of the first protective layer 25, and the body 23 is fixed between the second surface 252 of the first protective layer 25 and the third surface 261 of the second protective layer 26. The two conductive terminals 24 protrude from the first protective layer 25 and the second protective layer 26, and the conductive terminals 24 are fixedly connected to the inner surface 12 of the exterior trim panel 10. Exemplarily, in the case where the exterior trim panel 10 is a plastic exterior trim panel, the protective member 21 may be integrally formed with the plastic exterior trim panel through injection molding, such that the protective member 21 is fixedly connected to the inner surface 12 of the plastic exterior trim panel 10.

Reference is made to FIG. 3 and FIG. 5. In this embodiment, the NFC circuit board 30A is fixedly connected to a surface of the NFC antenna module 20 away from the exterior trim panel 10 and is electrically connected to the NFC antenna coil 22. Specifically, an adhesive layer 32A is disposed on a surface of the NFC circuit board 30A facing the NFC antenna module. A surface of the adhesive layer 32A facing away from the NFC circuit board 30A is adhered to the fourth surface 262 of the second protective layer 26. The adhesive layer 32A is used to fixedly connect the NFC circuit board 30A and the NFC antenna module 20. The NFC circuit board 30A is connected to the two conductive terminals 24 of the NFC antenna coil 22 via two wires, respectively, to achieve electrical connection with the NFC antenna coil 22. In other embodiments, the NFC circuit board 30A may be adhered to the two conductive terminals 24 of the NFC antenna coil 22 via conductive tape to achieve electrical connection with the NFC antenna coil 22, and specific methods are not limited herein. The NFC circuit board 30A is further provided with a wiring harness 31. The NFC circuit board 30 is in electrical and signal connection with a control system of the vehicle 1000 via the wiring harness 31. In this embodiment, the NFC antenna module 20 and the NFC circuit board 30A are structurally separated from each other. That is, the NFC antenna module 20 and the NFC circuit board 30A are not accommodated in and fixed to a single housing to form an integrated NFC module. This configuration allows the layout of the NFC antenna module 20 and the NFC circuit board 30A to be flexibly adjusted according to the size of the internal space of the pillar assembly 100, free from the constraint imposed by the size of the housing of an integrated NFC module.

In this embodiment, the NFC circuit board 30 and the NFC antenna module 20 are designed to be separate from each other. The NFC antenna coil 22 mounted in the protective member 21 may be electrically connected to various structures or models of NFC circuit boards 30. Therefore, the split-type designed NFC circuit board 30 and NFC antenna module 20 can be adapted to pillar assemblies 100 with different spatial structures, having high universality. Furthermore, in this embodiment, the NFC circuit board 30 and the NFC antenna module 20 are stacked, avoiding the disadvantages of integrated NFC modules, such as occupying excessive mounting space, encroaching on the mounting space for other components, and weakening the strength of a side enclosing sheet metal of the pillar assembly 100. Moreover, in this embodiment, the NFC antenna module 20 is mounted and fixed to the inner surface 12 of the exterior trim panel 10. This design breaks through the size constraints of integrated NFC modules, thus allowing an NFC antenna coil with the largest possible area to be disposed on the exterior trim panel 10, thereby improving the coupling coefficient between the NFC antenna and a smart card antenna and enhancing the NFC signal sensing performance of the pillar assembly 100 during card tapping. Furthermore, the NFC antenna module 20 is mounted and fixed to the inner surface 12 of the exterior trim panel 10, so that the NFC antenna module 20 is positioned away from sheet metal components of the pillar assembly 100, which reduces signal interference from the sheet metal components to the NFC antenna module 20 and lowers the risk of the NFC antenna module 20 being exposed to electrostatic discharge during mounting.

In an embodiment, the electrical connection member providing electrical connection between the NFC antenna module 20 and the NFC circuit board 30A may be an electromagnetic induction wireless connection module or a resonant wireless connection module.

Reference is again to FIG. 3 and FIG. 5. In this embodiment, the protective shell 40 is substantially a rectangular cover. The protective shell 40 covers the NFC antenna module 20 and the NFC circuit board 30 and is fixedly connected to the exterior trim panel 10. Specifically, the protective shell 40 has a bottom wall 41 and a side wall 42. The side wall 42 surrounds a periphery of a side of the bottom wall 41. The protective shell 40 covers the inner surface 12 and, together with the exterior trim panel 10, encapsulates the NFC antenna module 20 and the NFC circuit board 30. In the thickness direction of the pillar assembly 100, the bottom wall 41 is located on a side of the NFC circuit board 30 away from the exterior trim panel 10 and is opposite to and spaced apart from the NFC circuit board 30. The side wall 42 surrounds the NFC antenna module 20 and the NFC circuit board 30, and is spaced apart from the NFC antenna module 20 and the NFC circuit board 30. A surface of the side wall 42 away from the bottom wall 41 is fixedly connected to the inner surface 12 of the exterior trim panel 10. In some embodiments, an adhesive member 43 is provided between the surface of the side wall 42 away from the bottom wall 41 and the inner surface 12 of the exterior trim panel 10. The adhesive member 43 may be an adhesive tape such as a polyurethane (PU) resin adhesive or a foam double-sided tape. The protective shell 40 is fixedly connected to the exterior trim panel 10 via the adhesive member 43. A wire-passing hole 44 is defined in the protective shell 40. The wire-passing hole 44 is located on the bottom wall 41 of the protective shell 40 and penetrates through the bottom wall 41 in a thickness direction of the bottom wall 41. The wire-passing hole 44 is used for passing the wiring harness 31 of the NFC circuit board 30, enabling electrical and signal connection between the NFC circuit board 30 and the control system of the vehicle 1000.

After the protective shell 40 covers the NFC antenna module 20 and the NFC circuit board 30 and is fixedly connected to the exterior trim panel 10, the bottom wall 41 of the protective shell 40, the side wall 42 of the protective shell 40, and the exterior trim panel 10 together form a sealed cavity that is waterproof, dustproof, and antistatic, protecting the NFC circuit board 30 and the NFC antenna module 20 accommodated in the sealed cavity. After the wiring harness 31 of the NFC circuit board 30 passes through the wire-passing hole 44 and exits the protective shell 40, the wire-passing hole 44 is sealed with an insulating sealing plug to ensure the sealing of the sealed cavity and the insulation between the sealed cavity and the wiring harnesses 31.

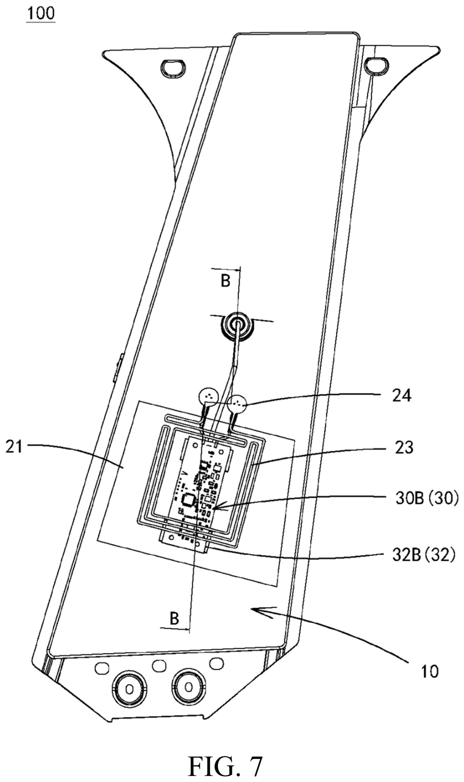

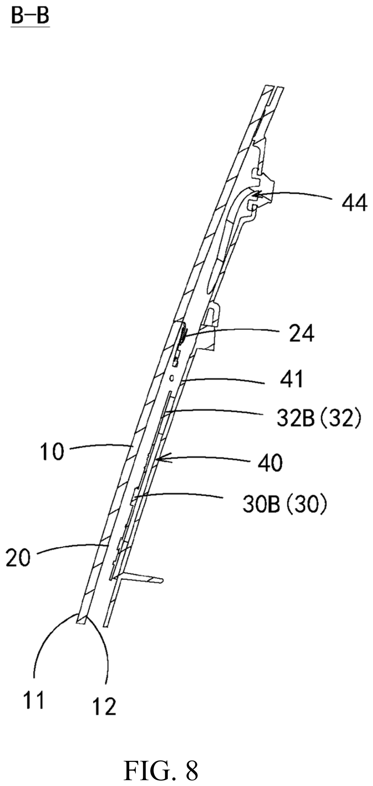

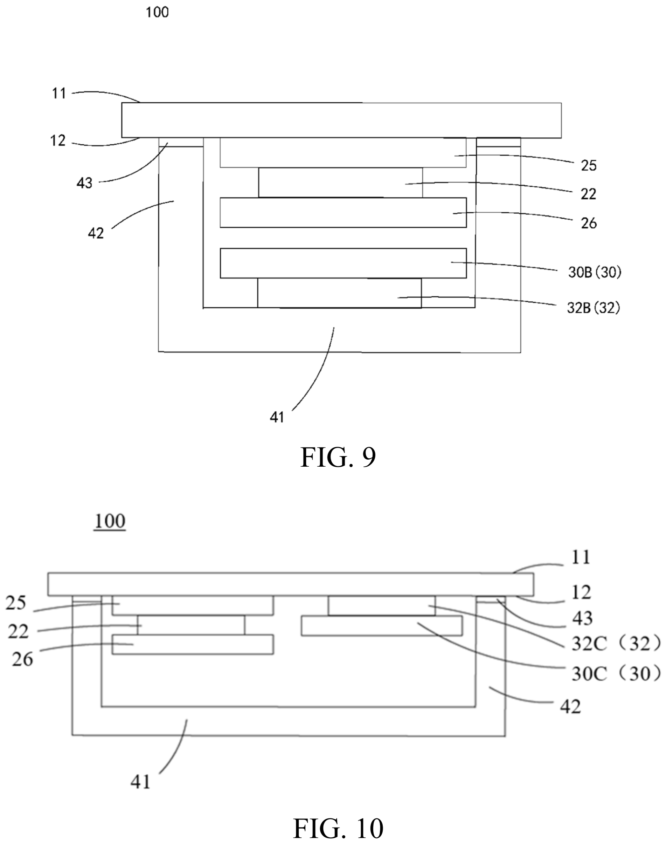

Reference is made to FIG. 7 to FIG. 9. FIG. 7 is a schematic structural view of the pillar assembly 100 provided in a second embodiment of the disclosure. FIG. 8 is a cross-sectional schematic view of the pillar assembly 100 illustrated in FIG. 7, taken along line B-B. FIG. 9 is a schematic view of a layer structure of the pillar assembly 100 illustrated in FIG. 7.

The difference between the pillar assembly 100 of the second embodiment and the pillar assembly 100 of the first embodiment lies in that the NFC circuit board 30B is fixedly connected to the protective shell 40.

In this embodiment, the NFC circuit board 30B is fixedly connected to a surface of the bottom wall 41 of the protective shell 40 facing the exterior trim panel 10, and the NFC circuit board 30B is located between the side walls 42 of the protective shell 40 and spaced apart from the side walls 42. Specifically, an adhesive layer 32B is disposed on a surface of the NFC circuit board 30B facing the bottom wall 41. A surface of the adhesive layer 32B away from the NFC circuit board 30B is adhered to a surface of the bottom wall 41 facing the side wall 42. The adhesive layer 32B is used to fixedly connect the NFC circuit board 30B to the protective shell 40. The NFC circuit board 30B is spaced apart from the NFC antenna module 20 and the exterior trim panel 10. In other embodiments, the NFC circuit board 30B may be connected to the bottom wall 41 via hot riveting. The NFC circuit board 30B is connected to the two conductive terminals 24 of the NFC antenna coil 22 via two wires, respectively, to achieve electrical connection with the NFC antenna coil 22. The NFC circuit board 30B is provided with a wiring harness 31. The wiring harness 31 passes through the wire-passing hole 44 defined in the bottom wall 41 of the protective shell 40 to exit the protective shell 40, to achieve electrical and signal connection with the control system of the vehicle 1000. In this embodiment, the NFC antenna module 20 and the NFC circuit board 30B are structurally separated from each other. The NFC antenna module 20 is fixedly connected to the exterior trim panel 10, and the NFC circuit board 30B is fixedly connected to the protective shell 40.

In this embodiment, the NFC circuit board 30 and the NFC antenna module 20 are designed to be separate from each other, and the NFC circuit board 30 is fixedly connected to the protective shell 40, which addresses the disadvantages of integrated NFC modules, such as occupying excessive mounting space, encroaching on the mounting space for other components, weakening the strength of a side enclosing sheet metal of the pillar assembly 100, and having low universality. Moreover, in this embodiment, the NFC antenna module 20 is mounted and fixed to the inner surface 12 of the exterior trim panel 10. This design breaks through the size constraints of integrated NFC modules, thus allowing an NFC antenna coil with the largest possible area to be disposed on the exterior trim panel 10, thereby enhancing the NFC signal sensing performance of the pillar assembly 100 during card tapping. Furthermore, the NFC antenna module 20 is positioned away from sheet metal components of the pillar assembly 100, which reduces signal interference from the sheet metal components to the NFC antenna module 20 and lowers the risk of the NFC antenna module 20 being exposed to electrostatic discharge during mounting.

Reference is made to FIG. 10, which is a schematic view of a layer structure of the pillar assembly 100 provided in a third embodiment of the disclosure.

The difference between the pillar assembly 100 of the third embodiment and the pillar assemblies 100 of the first and second embodiments lies in that the NFC circuit board 30 is fixedly connected to the exterior trim panel 10.

In this embodiment, the NFC circuit board 30C is fixedly connected to the inner surface 12 of the exterior trim panel 10 and is disposed parallel to and spaced apart from the NFC antenna module 20. Specifically, an adhesive layer 32C is disposed on a surface of the NFC circuit board 30C facing the exterior trim panel 10. A surface of the adhesive layer 32A away from the NFC circuit board 30A is adhered to the inner surface 12 of the exterior trim panel 10. The adhesive layer 32 is used to fixedly connect the NFC circuit board 30A to the exterior trim panel 10. In other embodiments, the NFC circuit board 30C may be connected to the exterior trim panel 10 via hot riveting. The NFC circuit board 30C is connected to the two conductive terminals 24 of the NFC antenna coil 22 via two wires, respectively, to achieve electrical connection with the NFC antenna coil 22. The NFC circuit board 30C is provided with a wiring harness 31. The wiring harness 31 passes through the wire-passing hole 44 defined in the bottom wall 41 of the protective shell 40 to exit the protective shell 40, to achieved electrical and signal connection with the control system of the vehicle 1000. In this embodiment, the NFC antenna module 20 and the NFC circuit board 30C are structurally separated from each other. The NFC antenna module 20 and the NFC circuit board 30C are fixedly connected to the inner surface 12 of the exterior trim panel 10. The NFC antenna module 20 is disposed parallel to and spaced apart from the NFC circuit board 30C.

In this embodiment, the NFC circuit board 30 and the NFC antenna module 20 are designed to be separate from each other, the NFC circuit board 30 is parallel to and spaced apart from the NFC antenna module 20, and the NFC circuit board 30 and the NFC antenna module 20 are fixed to the inner surface 12 of the exterior trim panel 10. This configuration not only overcomes the disadvantages of integrated NFC modules, such as occupying excessive mounting space and having low universality, but also further reduces the thickness of the protective shell 40, thereby further reducing the occupation of the mounting space of the vehicle body.

The embodiments of the disclosure are described in detail above. The principles and implementation manners of the disclosure are described in the specific examples. The illustration of the above embodiments is only for understanding the disclosure and its core idea; meanwhile, for those skilled in the art, according to the idea of the disclosure, there will be changes in the specific embodiment and the scope of application, in summary, the content of the specification should not be construed as limiting the disclosure.

## Claims

1. A vehicle pillar assembly for a vehicle, comprising an exterior trim panel, a near field communication (NFC) antenna module, and an NFC circuit board; wherein the exterior trim panel has an inner surface facing an interior of the vehicle;
wherein the NFC antenna module is connected to the inner surface, the NFC circuit board is located on a side of the exterior trim panel facing the interior of the vehicle, the NFC antenna module and the NFC circuit board are structurally separated from each other, and the NFC antenna module is electrically connected to the NFC circuit board via an electrical connection member.

2. The vehicle pillar assembly according to claim 1, wherein the NFC antenna module comprises a protective member and an NFC antenna coil, wherein the NFC antenna coil is mounted and fixed to the protective member, and the protective member is connected to the inner surface.

3. The vehicle pillar assembly according to claim 2, wherein the vehicle pillar assembly comprises a protective shell, wherein the protective shell covers the NFC antenna module and the NFC circuit board and is fixedly connected to the inner surface, and the protective shell and the exterior trim panel encapsulate the NFC antenna module and the NFC circuit board.

4. The vehicle pillar assembly according to claim 3, wherein the NFC circuit board is fixedly connected to a surface of the protective member away from the exterior trim panel, and the NFC circuit board is electrically connected to the NFC antenna coil.

5. The vehicle pillar assembly according to claim 3, wherein the protective shell has a bottom wall and a side wall, wherein the side wall surrounds a periphery of a side of the bottom wall, the bottom wall is opposite to and spaced apart from the exterior trim panel, and a surface of the side wall away from the bottom wall is fixedly connected to the inner surface; and
the NFC circuit board is fixedly connected to a surface of the bottom wall facing the exterior trim panel and is spaced apart from the NFC antenna module, and the NFC circuit board is electrically connected to the NFC antenna coil.

6. The vehicle pillar assembly according to claim 3, wherein the NFC circuit board is fixedly connected to the inner surface and is disposed parallel to and spaced apart from the NFC antenna module, and the NFC circuit board is electrically connected to the NFC antenna coil.

7. The vehicle pillar assembly according to claim 2, wherein the protective member comprises a first protective layer and a second protective layer, wherein in a thickness direction of the vehicle pillar assembly, the first protective layer is stacked on and fixed to the second protective layer, the first protective layer is connected to the inner surface, the second protective layer is disposed on a side of the first protective layer away from the exterior trim panel, and the NFC antenna coil is connected between the first protective layer and the second protective layer.

8. The vehicle pillar assembly according to claim 7, wherein the first protective layer and the second protective layer are both ink coatings; the first protective layer is coated on the inner surface, the NFC antenna coil is coated on a surface of the first protective layer facing away from the exterior trim panel, and the second protective layer is coated on the surface of the first protective layer facing away from the exterior trim panel and covers the antenna coil.

9. The vehicle pillar assembly according to claim 7, wherein the first protective layer and the second protective layer are both flexible printed circuits (FPCs) or insulating films, and the NFC antenna coil is clamped or coated between the first protective layer and the second protective layer.

10. The vehicle pillar assembly according to any one of claims 1 to 9, wherein the exterior trim panel is made of plastic, or the exterior trim panel is made of glass, or the exterior trim panel is made of glass ceramic.

11. The vehicle pillar assembly according to any one of claims 2 to 9, wherein the NFC antenna coil comprises a body, and the body is formed by printing with conductive silver paste, or formed by wrapping a copper wire.

12. The vehicle pillar assembly according to claim 7, wherein the first protective layer and the second protective layer are both insulating films, the exterior trim panel is made of plastic, and the first protective layer, the second protective layer, and the exterior trim panel are integrally formed through injection molding.

13. A vehicle, comprising the vehicle pillar assembly according to any one of claims 1 to 12, wherein the pillar assembly is connected between an upper beam and a lower beam of the vehicle.
